# EUROPÄISCHE PATENTSCHRIFT

(11) **EP 4 177 578 B1**
(45) Veröffentlichungstag und Bekanntmachung des Hinweises auf die Patenterteilung: **20.03.2024**
(21) Anmeldenummer: 21206634.4
(22) Anmeldetag: 05.11.2021
(51) Int. Cl.: G01F 23/284, G01F 25/20, G01S 7/40, G01S 13/88, G01S 7/03

(54) **VERFAHREN ZUR INBETRIEBNAHME EINES FÜLLSTANDMESSGERÄTS**
METHOD FOR COMMISSIONING A FILL LEVEL METER
PROCÉDÉ DE MISE EN SERVICE D'UN APPAREIL DE MESURE DE NIVEAU DE REMPLISSAGE

(43) Veröffentlichungstag der Anmeldung: 10.05.2023
(73) Patentinhaber: VEGA Grieshaber KG, 77709 Wolfach (DE)
(72) Erfinder: RAUER, Winfried, 77716 Fischerbach (DE); SCHULTHEISS, Daniel, 78132 Hornberg (DE); SKOWAISA, Jürgen, 77761 Schiltach (DE); KASPAR, Stefan, 77716 Hofstetten (DE); BURGERT, Florian, 77723 Gengenbach (DE); BREGGER, Andreas, 77709 Wolfach (DE); WEIS, Tobias, 79263 Simonswald (DE); SCHMID, Andreas, 77716 Fischerbach (DE)
(74) Vertreter: Maiwald GmbH

(56) Entgegenhaltungen:
- EP-A1- 3 097 391
- EP-A1- 3 420 320
- US-A1- 2009 282 892
- US-A1- 2016 098 500
- US-B2- 7 111 509

## Beschreibung

### Gebiet der Erfindung

Die Erfindung betrifft ein Verfahren zur Inbetriebnahme eines Füllstandmessgeräts. Weiterhin betrifft die Erfindung ein Füllstandmessgerät, ein Programmelement, ein computerlesbares Medium und eine Verwendung.

### Hintergrund

Bei einer Inbetriebnahme eines Füllstandmessgeräts, das insbesondere eine Radarsensoreinheit für die Messung verwendet, sind in vielen Fällen eine Vielzahl von Messungen erforderlich, um eine hohe Sicherheit und/oder Messgenauigkeit nach der Inbetriebnahme des Füllstandmessgeräts zu erhalten. Beispielsweise sind für eine Grenzstandbestimmung, die nur eine obere und untere Grenze des Füllstands in dem Behälter erfassen soll, für die Inbetriebnahme mindestens zwei Messungen erforderlich. Für eine Füllstandmessung (sog. Bereichsüberwachung) sind in vielen Fällen fünf Messungen erforderlich. Dabei wird für jede dieser Messungen ein Medium in der gewünschten Höhe in den Behälter gefüllt. Derartige Messungen können einen gewissen - manchmal einen hohen - Aufwand an Material und Zeit verursachen.

Die Druckschrift EP 3 097 391 A1 betrifft ein Radarfüllstandmessgerät, einschließlich einer Positionierung des Geräts.

Die Druckschrift EP 3 420 320 A1 betrifft eine Simulation von Echokurven, die von einem Füllstandmessgerät mittels gepulstem Radar erfasst wurden.

### Zusammenfassung

Es ist Aufgabe der Erfindung, die Anzahl der Messungen bei einer Inbetriebnahme eines Füllstandmessgeräts in zumindest einigen Fällen zu reduzieren. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren zur Inbetriebnahme eines Füllstandmessgeräts, das zur Messung eines Füllstands eines Füllgutes in einem Behälter eingerichtet ist. Das Verfahren weist folgende Schritte auf:
erfassen, mittels einer Radarsensoreinheit des Füllstandmessgeräts, einer (erfassten) Echokurve, wobei die Echokurve mindestens ein erstes Echo aufweist;
auswählen, aus der (erfassten) Echokurve, des ersten (erfassten) Echos, das eine erste Entfernung und eine erste Amplitude aufweist, wobei die erste Amplitude die höchste Amplitude der Echokurve aufweist;
bestimmen einer berechneten ersten Amplitude, wobei die berechnete erste Amplitude eine Funktion der ersten Entfernung ist;
wenn die (erfasste) erste Amplitude höher ist als die berechnete erste Amplitude, bewerten der Echokurve als akzeptabel für die Inbetriebnahme;
bestimmen mindestens eines zweiten Echos, wobei das zweite Echo eine zweite Entfernung und eine zweite Amplitude aufweist, wobei die zweite Entfernung kleiner ist als die erste Entfernung; und wenn die zweite Amplitude größer ist als eine zweite Referenzamplitude einer Referenzechokurve an der zweiten Entfernung, bewerten der gemessenen Echokurve als nichtakzeptabel für die Inbetriebnahme.

Bei der Inbetriebnahme des Füllstandmessgeräts kann der Behälter, dessen Füllstand, Grenzstand und/oder Topologie gemessen werden soll, leer oder (zumindest teilweise) mit einem Medium gefüllt sein. Es kann sinnvoll sein, den Behälter nicht vollständig zu füllen, so dass das Medium zumindest einige Zentimeter von einem sog. "Nahbereich" der Radarsensoreinheit entfernt ist.

Bei einer Messung erfasst die Radarsensoreinheit des Füllstandmessgeräts die Echokurve. Das Erfassen der Echokurve kann z.B. so realisiert sein, dass Radarwellen - die z.B. von einem Sender der Radarsensoreinheit erzeugt wurden - von dem Medium und/oder von Teilen des Behälters reflektiert werden, von einem Empfänger der Radarsensoreinheit empfangen werden. Die empfangenen reflektierten Radarwellen werden dann, z.B. in einer Auswerteeinheit (und/oder in der Radarsensoreinheit) des Füllstandmessgeräts, in die sog. Echokurve umgewandelt. Für die Messung können z.B. ein FMCW-Verfahren (FMCW: frequency modulated continuous wave radar, Dauerstrichradar), ein Pulsradar und/oder andere Radarverfahren verwendet werden. Die Echokurve wird häufig in einem Diagramm dargestellt, dessen x-Achse eine Entfernung (meist linear) darstellt und dessen y-Achse eine Amplitude (meist logarithmisch, d.h. in dB linear) darstellt. Ein (lokales) Maximum der Echokurve entspricht meist einer Reflexion, z.B. von dem Medium und/oder von Teilen des Behälters. Ein globales Maximum tritt üblicherweise in dem Nahbereich der Radarsensoreinheit auf und wird z.B. von Reflexionen von einer Hornantenne der Radarsensoreinheit erzeugt. In der Praxis hat sich gezeigt, dass in einer derartigen Echokurve nicht nur gewünschte Maxima erscheinen, sondern auch Störungen, welche die Messung verfälschen können. Die Störungen können viele verschiedene Ursachen haben.

Eine Echokurve einer realen Messung weist dabei mindestens ein Echo auf. Weist die Echokurve mehr als ein Echo auf, dann wird aus der Vielzahl von Echos dasjenige als "erstes Echo" ausgewählt, dessen Amplitude die höchste Amplitude der Echokurve aufweist. Eine Amplitude im Nahbereich des Senders (die höher sein kann als die Amplitude des ersten Echos) kann dabei in zumindest einigen Fällen vernachlässigt werden. Wenn die Echokurve nur ein einziges Echo aufweist, dann wird dieses als "erstes Echo" ausgewählt. Die Entfernung des ersten Echos wird als "erste Entfernung" und die Amplitude des ersten Echos wird als "erste Amplitude" bezeichnet.

Die berechnete erste Amplitude ergibt aus der Anwendung einer Funktion auf die erste Entfernung. Die Funktion kann dabei eine Abnahme der Intensität der reflektierten Radarwelle wiedergeben, wie sie sich beispielsweise ergibt, wenn die Füllgutoberfläche sich von einer Antenne des Senders entfernt. Dabei wird angenommen, dass die Füllgutoberfläche Radarwellen stark reflektiert, wie das beispielsweise bei Flüssigkeiten der Fall ist, oder auch bei einer Reflexion vom Boden des Behälters. Eine Füllgutoberfläche, die Radarwellen nicht stark reflektiert, wäre z.B. ein grobkörniges Schüttgut, und/oder Flüssigkeiten mit kleinen DK-Werten (Dielektrizitätskonstanten), wie z.B. LPG (Liquified Petroleum Gas), Öle und Lösungsmittel. Die Funktion kann errechnet sein (z.B. umgekehrt proportional) und/oder aus Messungen abgeleitet sein. Ein Bezugspunkt ("Maximalwert") der Funktion, von dem ab diese Abnahme der Intensität berechnet werden kann, kann z.B. anhand von Erfahrungswerten, z.B. aus der Charakteristik von unterschiedlichen Antennensystemen gewonnen werden.

Wenn die erste Amplitude höher ist als die berechnete erste Amplitude, kann die Echokurve als akzeptabel für die Inbetriebnahme bewertet werden. In vielen Fällen kann damit die Inbetriebnahme abgeschlossen werden. Wenn die erste Amplitude niedriger ist als die berechnete erste Amplitude, kann das mehrere Ursachen haben. Beispielsweise können Störungen aufgetreten sein, und/oder die Radarwellen wurden von den Wänden des Behälters "geschluckt", z.B. durch Einbauten in dem Behälter, durch Anhaftungen, etc. Ist die erste Amplitude niedriger ist als die berechnete erste Amplitude, kann dies bedeuten, dass Messungen mit dem Füllstandmessgerät fehlerhaft sein können. Daher wird in diesem Fall die Echokurve als nicht-akzeptabel für die Inbetriebnahme bewertet werden. Es kann dann erfolgreich sein, mehrere bzw. zusätzliche Messungen für die Inbetriebnahme durchzuführen.

Mit diesem Verfahren ist es also möglich, die Anzahl der Messungen bei einer Inbetriebnahme eines Füllstandmessgeräts in zumindest einigen Fällen zu reduzieren. Dies kann vorteilhafterweise dazu beitragen, den Aufwand für die Inbetriebnahme zu reduzieren. Insbesondere kann es dazu beitragen, einem Anlagenbetreiber das Anfahren mit Medium zu ersparen, und der Anlagenbetreiber kann trotzdem eine hohe Sicherheit bei der Inbetriebnahme erhalten, bzw. eine Vielzahl von Messungen bei der Inbetriebnahme ist nur noch in deutlich weniger Fällen erforderlich. Dies kann umso nützlicher sein, weil ein Anfahren der Schaltpunkte bzw. des gesamten Messbereiches von dem Anlagenbetreiber nicht immer durchführbar und/oder gewünscht ist, beispielsweise in Fällen, bei denen eine schnelle Inbetriebnahme erforderlich ist oder wenn zum Zeitpunkt der Inbetriebnahme kein Medium zur Verfügung steht.

In einigen Ausführungsformen ist der Behälter entweder leer oder zumindest teilweise mit einer Flüssigkeit gefüllt. Die Flüssigkeit kann z.B. auch eine Emulsion oder Suspension sein. Insbesondere kann die Füllgutoberfläche von Flüssigkeiten Radarwellen stark reflektieren.

In einigen Ausführungsformen ist, für das Bewerten der gemessenen Echokurve als akzeptabel, die erste Amplitude um einen Sicherheitsabstand höher als die berechnete erste Amplitude, wobei der Sicherheitsabstand 1 dB, 2 dB, 5 dB, 10 dB, 15 dB, oder mehr beträgt.

Der Sicherheitsabstand kann dabei z.B. Ungenauigkeit der Messung Rechnung tragen, die beispielsweise durch eine unregelmäßige Gestaltung des Behälters, dessen Wände, durch kleinere Einbauten etc. verursacht werden. Dieses verschärfte Kriterium, die Echokurve als akzeptabel für die Inbetriebnahme zu bewerten, kann die Anzahl der "falsch-positiv" Bewertungen, z.T. deutlich, reduzieren.

Erfindungsgemäß weist das Verfahren weitere Schritte auf: bestimmen mindestens eines zweiten Echos, wobei das zweite Echo eine zweite Entfernung und eine zweite Amplitude aufweist, wobei die zweite Entfernung kleiner ist als die erste Entfernung; und wenn die zweite Amplitude größer ist als eine zweite Referenzamplitude einer Referenzechokurve an der zweiten Entfernung, bewerten der gemessenen Echokurve als nichtakzeptabel für die Inbetriebnahme.

Es können ein oder mehrere zweite Echos gemessen werden. Die zweiten Echos können dabei eine niedrigere Amplitude als das erste Echo aufweisen. Die zweiten Echos können z.B. durch Einbauten in dem Behälter, durch Anhaftungen, etc. verursacht sein, die zwischen der Füllgutoberfläche und der Sendeantenne angeordnet sind.

In einigen Ausführungsformen entspricht die Referenzechokurve im Wesentlichen einer Echokurve, die in einem unendlich langen leeren Behälter gemessen wurde. Weiterhin kann ein Toleranzband berücksichtigt werden; z.B. + 1 dB, + 2 dB, + 3 dB um eine berechnete Referenzechokurve.

In einigen Ausführungsformen wird ein Echo von einem Nahbereich des Füllstandmessgeräts vernachlässigt. Der Nahbereich des Füllstandmessgeräts kann z.B. einen Abstand von weniger als 10 cm oder 20 cm von dem Sender (z.B. von einem Sender-Chip) haben. Das Echo von dem Nahbereich kann z.B. von einer Hornantenne (als Sendeantenne) verursacht sein, oder von einem sog. "Dom", z.B. einem Schacht, in dem der Sender angeordnet ist und der in zumindest einigen Fällen oben an einer Innenseite des Behälters angeordnet ist. Das Echo von dem Nahbereich kann eine hohe Amplitude aufweisen. Das Echo von dem Nahbereich kann ein sog. Antennenklingeln aufweisen, d.h. Störungen, die z.B. bei der Antenneneinkopplung verursacht werden. Das Echo von dem Nahbereich kann z.B. durch eine sog. "Werks-Störsignal-Ausblendung" bereits beim Hersteller von einer Bewertung - z.B. als "reales" Echo, von einer Füllgutoberfläche - ausgenommen werden. In Fällen, bei denen beim aktuell gemessenen Echo keine erhöhte Amplitude gegenüber der Werksstörsignalausblendung zu erkennen ist, kann die Messung als akzeptabel für die Inbetriebnahme bewertet werden.

Ein Aspekt betrifft ein Füllstandmessgerät zur Messung eines Füllstands eines Füllgutes in einem Behälter. Das Füllstandmessgerät weist eine Radarsensoreinheit auf, die zum Senden von Radarwellen und zum Empfangen von reflektierten Radarwellen eingerichtet ist, und eine Auswerteeinheit, die zum Umwandeln der reflektierten Radarwellen in eine Echokurve und zur Auswertung der Echokurve wie oben und/oder nachfolgend beschrieben eingerichtet ist. Die Radarsensoreinheit kann beispielsweise ein FMCW-Verfahren oder ein Pulsradar zur Messung verwenden. Die Radarsensoreinheit und die Auswerteeinheit kann in zumindest einigen Fällen als eine integrierte Hardware - z.B. auf derselben Platine, oder auf demselben Chip - realisiert sein.

Ein Aspekt betrifft eine Verwendung eines Füllstandmessgeräts wie oben und/oder nachfolgend beschrieben zur Messung eines Füllstands, einer Topologie und/oder eines Grenzstandes eines Füllgutes in einem Behälter.

Ein Aspekt betrifft ein Programmelement, welches, wenn es auf einer Auswerteeinheit eines Füllstandmessgeräts wie oben und/oder nachfolgend beschrieben und/oder auf einer anderen Recheneinheit ausgeführt wird, die Auswerteeinheit und/oder die Recheneinheit anweist, das Verfahren wie oben und/oder nachfolgend beschrieben durchzuführen.

Ein Aspekt betrifft ein computerlesbares Medium, auf dem das hier beschriebene Programmelement gespeichert ist.

Es sei noch angemerkt, dass die verschiedenen oben und/oder nachfolgend beschriebenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1**: schematisch ein Füllstandmessgerät gemäß einer Ausführungsform;
- **Fig. 2**: ein Beispiel einer Echokurve gemäß einer Ausführungsform;
- **Fig. 3**: ein weiteres Beispiel einer Echokurve gemäß einer Ausführungsform;
- **Fig. 4**: ein Flussdiagramm mit einem Verfahren gemäß einer Ausführungsform;
- **Fig. 5**: ein Inbetriebnahme-Szenario gemäß einer Ausführungsform;
- **Fig. 6**: ein Inbetriebnahme-Szenario gemäß einer weiteren Ausführungsform;
- **Fig. 7**: ein Inbetriebnahme-Szenario gemäß einer weiteren Ausführungsform;
- **Fig. 8**: einige Beispiele für Echoamplituden gemäß einer weiteren Ausführungsform.

### Detaillierte Beschreibung von Ausführungsformen

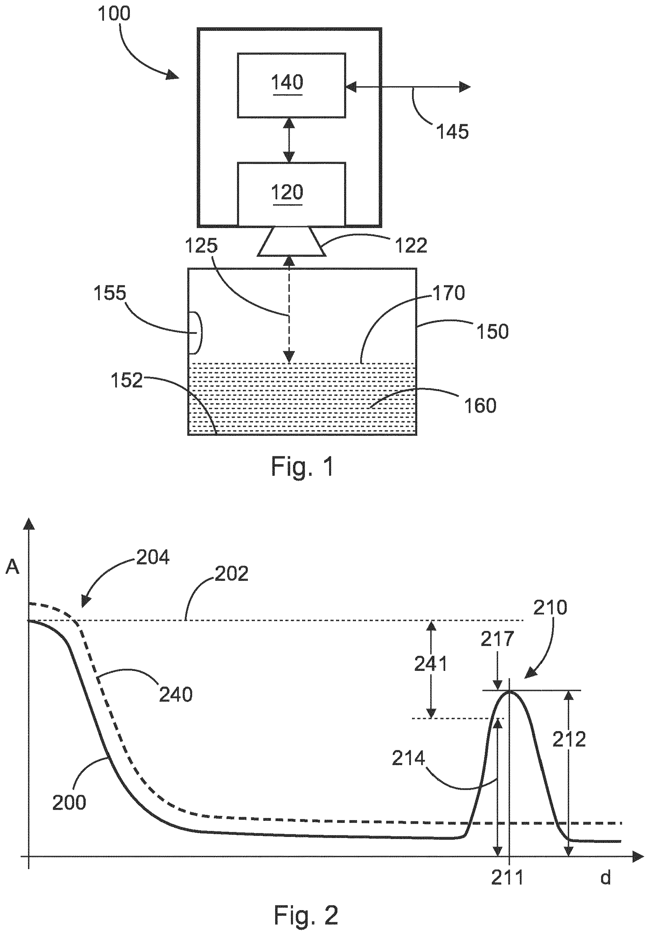

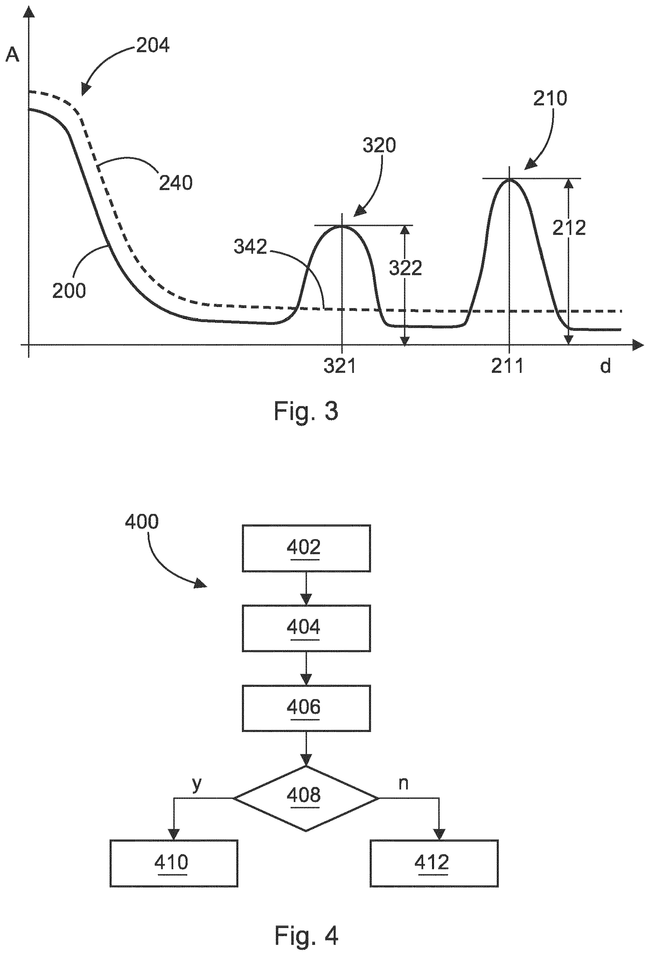

**Fig. 1** zeigt schematisch ein Füllstandmessgerät 100 und einen Behälter 150 gemäß einer Ausführungsform. Das Füllstandmessgerät 100 und der Behälter 150 sind nicht maßstäblich dargestellt. Insbesondere ist der Behälter 150 in der Regel deutlich größer als das Füllstandmessgerät 100. In zumindest einigen Fällen kann das Füllstandmessgerät 100 in einem sog. "Dom" angeordnet sein, z.B. einem Schacht, der in zumindest einigen Fällen oben an einer Innenseite des Behälters angeordnet ist. Das Füllstandmessgerät 100 ist zur Messung eines Füllstands 170 eines Füllgutes 160 in dem Behälter 150 eingerichtet. Das Füllstandmessgerät 100 weist eine Radarsensoreinheit 120 auf, die zum Senden von Radarwellen und zum Empfangen von reflektierten Radarwellen 125 eingerichtet ist. Das Senden und Empfangen der Radarwellen geschieht mittels der Antenne 122, die hier schematisch als Hornantenne dargestellt ist. Die reflektierten Radarwellen 125 werden z.B. von der Füllgutoberfläche 170 reflektiert, und/oder von einem Boden 152 des Behälters 150. Weiterhin können die Radarwellen von Einbauten und/oder Anhaftungen 155, insbesondere an oder in der Nähe einer Wand des Behälters 150 reflektiert werden. Die reflektierten Radarwellen 125 werden dabei von der Radarsensoreinheit 120 (über die Antenne 122) empfangen und an eine Auswerteeinheit 140 geleitet, die zum Umwandeln der reflektierten Radarwellen 125 in eine Echokurve 200 (siehe z.B. **Fig. 2** oder **Fig. 3****)** eingerichtet ist. Die Auswerteeinheit 140 ist weiterhin zur Auswertung der Echokurve 200 eingerichtet, wie oben und/oder nachfolgend beschrieben. Die ausgewerteten Messwerte werden dann mittels einer Leitung 145 an weitere Systeme übertragen, z.B. an einen Leitstand. Die Leitung 145 kann z.B. als ein Zweileitersystem ausgeführt sein und/oder andere Protokolle unterstützen. Die Leitung 145 kann z.B. auch zu einem Funkmodul führen, das die Messwerte drahtlos übertragen kann.

Zur Inbetriebnahme des Füllstandmessgeräts 100 wird das Füllstandmessgerät 100 an oder in dem Behälter 150 angeordnet, z.B. oben an dem Behälter 150 oder in einem sog. "Dom" (nicht dargestellt). Anschließend können dem Füllstandmessgerät 100 Radarwellen gesendet werden, und aus den reflektierten Radarwellen 125 eine Echokurve 200 gebildet werden. Die Echokurve 200 kann dann bewertet werden, und in zumindest einigen Fällen kann auf Basis der Echokurve 200 entschieden werden, ob die Echokurve 200 - und damit das Füllstandmessgerät 100 - als akzeptabel für die Inbetriebnahme bewertet wird.

**Fig. 2** zeigt ein Beispiel einer Echokurve 200 gemäß einer Ausführungsform, die z.B. in einem leeren oder zumindest teilweise mit einer Flüssigkeit gefüllten Behälter 150 (siehe z.B. **Fig. 1****)** gemessen wurde. Die Echokurve 200 wird in einem Diagramm dargestellt, dessen x-Achse eine Entfernung d, in linearer Darstellung, und dessen y-Achse eine Amplitude A, in dB, darstellt. Der Ursprung kann z.B. einen Amplitudenwert A = 0 dB aufweisen und eine Entfernung von d = 0 m von dem Sender. Die höchste Amplitude 202 der Echokurve 200 wird dabei in unmittelbarer Nähe des Senders gemessen. Ferner weist ein Nahbereich 204 hohe Amplitudenwerte auf. Weil Amplitudenwerte, die in dem Nahbereich 204 gemessen wurden, meist keine "Nutz-Information" wiedergeben, d.h. eine Reflexion von einer Füllgutoberfläche, können Echos von dem Nahbereich, z.B. durch eine sog. "Werks-Störsignal-Ausblendung", bereits beim Hersteller von einer Bewertung ausgenommen werden. Dies kann z.B. dadurch erfolgen, dass (vor einer Auswertung der Echokurve) von der gemessenen Echokurve 200 eine berechnete Echokurve 240 subtrahiert wird. Die berechnete Echokurve oder Referenzechokurve 240 kann im Wesentlichen einer Echokurve entsprechen, die in einem unendlich langen leeren Behälter gemessen wurde. Weiterhin kann für die Referenzechokurve 240 ein Toleranzband berücksichtigt werden, das z.B. + 1 dB, + 2 dB, + 3 dB zu einer berechneten Referenzechokurve addiert wird.

Bei der Inbetriebnahme des Füllstandmessgeräts kann dann die Echokurve 200 bewertet werden. Dabei weist die Echokurve 200 bei realen Messung ein erstes Echo 210 auf. Das erste Echo 210 kann z.B. (bei einem zumindest teilweise gefüllten Behälter) von der Füllgutoberfläche 170 oder (bei einem leeren Behälter) von einem Boden 152 des Behälters 150 reflektiert worden sein. Bei einem zumindest teilweise gefüllten Behälter kann die Echokurve 200 auch (mindestens) zwei Echos aufweisen, nämlich von der Füllgutoberfläche 170 und von dem Boden 152; dabei weist das Echo von dem Boden 152 eine niedrigere Amplitude auf als das Echo von der Füllgutoberfläche 170, insbesondere eine wesentlich niedrigere Amplitude. Das erste Echo 210 weist dabei eine erste Entfernung 211 und eine erste Amplitude 212 auf. Als erstes Echo 210 kann dabei dasjenige Echo ausgewählt werden, das - außer den Echos von dem Nahbereich 204 - die höchste Amplitude der Echokurve 200 aufweist. Das erste Echo 210 kann z.B. dadurch bestimmt werden, dass es am höchsten aus der Referenzechokurve 240 herausragt. Weiterhin kann eine berechnete erste Amplitude 214 bestimmt werden, wobei die berechnete erste Amplitude 214 eine Funktion der ersten Entfernung 211 ist. Beispielsweise kann eine mit der Entfernung d monoton abnehmende Funktion verwendet werden, die dann auf die höchste Amplitude 202 angewendet wird und, durch Subtraktion eines Amplitudenwertes 241 von der höchsten Amplitude 202, die berechnete erste Amplitude 214 ergibt. In dem Beispiel von **Fig. 2** ist die erste Amplitude 212 höher ist als die berechnete erste Amplitude 214, sogar um einen Sicherheitsabstand 217 höher ist als die berechnete erste Amplitude 214. Daher wird die in **Fig. 2** gezeigte Echokurve 200 als akzeptabel für die Inbetriebnahme bewertet.

**Fig. 3** zeigt ein weiteres Beispiel einer Echokurve 300 gemäß einer Ausführungsform. Gleiche Bezugszeichen wie bei **Fig. 2** bezeichnen gleiche oder ähnliche Elemente. Die Echokurve 300 zeigt, zusätzlich zu dem ersten Echo 210, ein zweites Echo 320. Bei realen Messungen können ein oder mehrere zweite Echos 320 gemessen werden. Die zweiten Echos 320 können dabei eine niedrigere Amplitude als das erste Echo 210 aufweisen. Die zweiten Echos 320 können z.B. durch Einbauten in dem Behälter, durch Anhaftungen 155 (siehe **Fig. 1**), etc. verursacht sein, die zwischen der Füllgutoberfläche und der Sendeantenne angeordnet sind. Das in **Fig. 3** dargestellte zweite Echo 320 weist eine zweite Entfernung 321 und eine zweite Amplitude 322 auf, wobei die zweite Entfernung 321 kleiner ist als die erste Entfernung 211. Wenn die zweite Amplitude 322 größer ist als eine zweite Referenzamplitude 342 einer Referenzechokurve 240 an der zweiten Entfernung 321, wird die gemessene Echokurve als nicht-akzeptabel für die Inbetriebnahme bewertet.

In einigen Ausführungsformen können auch Echos aus dem Nahbereich 204 berücksichtigt werden. Dabei kann in Fällen, bei denen beim aktuell gemessenen Echo eine erhöhte Amplitude gegenüber der Werksstörsignalausblendung zu erkennen ist, die Messung als nicht-akzeptabel für die Inbetriebnahme bewertet werden.

**Fig. 4** zeigt ein Flussdiagramm 400 mit einem Verfahren zur Inbetriebnahme eines Füllstandmessgeräts 100 (siehe z.B. **Fig. 1**) gemäß einer Ausführungsform. In einem Schritt 402 wird, mittels einer Radarsensoreinheit 120 des Füllstandmessgeräts 100, eine Echokurve 200 (siehe z.B. **Fig. 2** oder **Fig. 3**) erfasst, wobei die Echokurve 200 mindestens ein erstes Echo 210 aufweist. In einem Schritt 404 wird aus der Echokurve 200, ein erstes Echos 210 ausgewählt, das eine erste Entfernung 211 und eine erste Amplitude 212 aufweist. Dabei weist die erste Amplitude 212 die höchste Amplitude der Echokurve 200 auf (ohne die Amplituden in dem Nahbereich 204). In einem Schritt 406 wird eine berechnete erste Amplitude 214 bestimmt, wobei die berechnete erste Amplitude 214 eine Funktion der ersten Entfernung 211 ist. In einem Schritt 408 wird abgefragt, ob die erste Amplitude 212 höher ist als die berechnete erste Amplitude 214. Wenn die erste Amplitude 212 höher ist als die berechnete erste Amplitude 214, wird in einem Schritt 410 die Echokurve 200 als akzeptabel für die Inbetriebnahme bewertet. Andernfalls wird in einem Schritt 412 die Echokurve 200 als nicht-akzeptabel für die Inbetriebnahme bewertet. In diesem Fall können z.B. zusätzliche Messungen für die Inbetriebnahme durchgeführt werden.

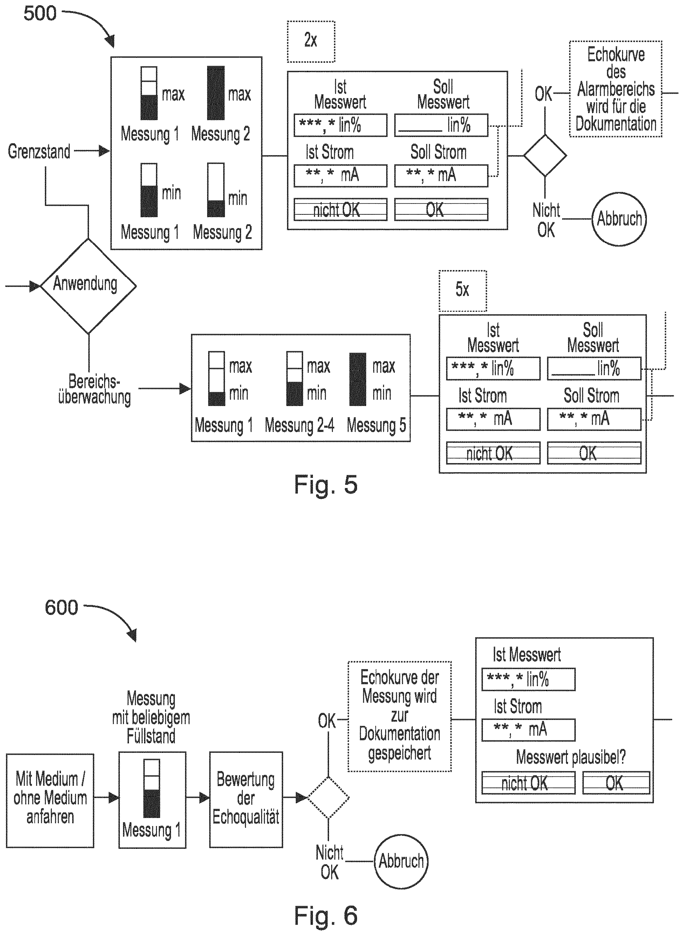

**Fig. 5** zeigt ein Inbetriebnahme-Szenario 500 gemäß einer Ausführungsform. Dabei sind für eine Anwendung zur Messung eines Grenzstandes eines Füllgutes mindestens zwei Messungen erforderlich, beispielsweise eine Messung eines oberen Füllstands ("max") in dem Behälter und eines unteren Füllstands ("min"). Dabei wird, mittels einer Radarsensoreinheit eine Echokurve erfasst und ausgewertet. Für jeden Grenzstand wird dabei je ein Ist-Messwert erfasst, der z.B. in einem Zweileitersystem - wie z.B. gemäß einem HART-Protokoll (Highway Addressable Remote Transducer) - einem Ist-Strom entspricht. Dieser Ist-Messwert bzw. Ist-Strom wird mit einem Soll-Messwert bzw. Soll-Strom verglichen. Auf Basis dieser Messwerte kann ein Füllstandmessgerät zur Messung des Grenzstandes als akzeptabel für die Inbetriebnahme bewertet werden. Die Werte können, bei korrekten Messungen, z.B. für eine Dokumentation gespeichert werden. Bei nicht-korrekten Messungen kann die Inbetriebnahme abgebrochen werden.

Für eine Anwendung zur Messung eines Füllstandes eines Füllgutes sind mindestens fünf Messungen erforderlich, beispielsweise eine "max"-Messung an einem oberen Füllstand, eine "min"-Messung an einem unteren Füllstand und z.B. drei weitere Messungen mit weiteren ausgewählten Füllständen. Es wird dabei für jeden Grenzstand je ein Ist-Messwert erfasst, der z.B. einem Ist-Strom entspricht. Dieser Ist-Messwert bzw. Ist-Strom wird jeweils mit einem Soll-Messwert bzw. Soll-Strom verglichen. Auf Basis dieser Messwerte kann ein Füllstandmessgerät zur Messung des Füllstands und/oder einer Topologie als akzeptabel für die Inbetriebnahme bewertet werden. Die Werte können, bei korrekten Messungen, z.B. für eine Dokumentation gespeichert werden. Bei nicht-korrekten Messungen kann die Inbetriebnahme abgebrochen werden.

In zumindest einigen Fällen kann das Inbetriebnahme-Szenario verkürzt werden, insbesondere bei Anwendungen eines der Verfahren wie oben und/oder nachfolgend beschrieben.

**Fig. 6** zeigt ein Inbetriebnahme-Szenario 600 gemäß einer weiteren Ausführungsform. Dabei kann ein Behälter 150 (siehe z.B. **Fig. 1**) zumindest teilweise gefüllt oder leer sein, d.h. ein Anfahren kann ohne ein Medium oder mit einem Medium, mit beliebigem Füllstand, erfolgen. Ist in dem Behälter, der für die Messung vorgesehen ist, ein Rührwerk vorhanden, kann nach der Position des Rührwerks differenziert werden: Wenn das Rührwerk im Messkanal des Radarsensors angeordnet ist, kann eine andere Art der Inbetriebnahme gewählt werden. Ist das Rührwerk nicht im Messkanal des Sensors, kann das Verfahren wie oben und/oder nachfolgend beschrieben verwendet werden.

Anschließend kann eine Bewertung der Echoqualität wie oben und/oder nachfolgend beschrieben erfolgen. Die Werte können, bei korrekten Messungen, z.B. für eine Dokumentation gespeichert werden. Bei nicht-korrekten Messungen kann die Inbetriebnahme abgebrochen werden. Alternativ oder zusätzlich können Messungen wie z.B. für das Inbetriebnahme-Szenario 500 (siehe oben) durchgeführt werden.

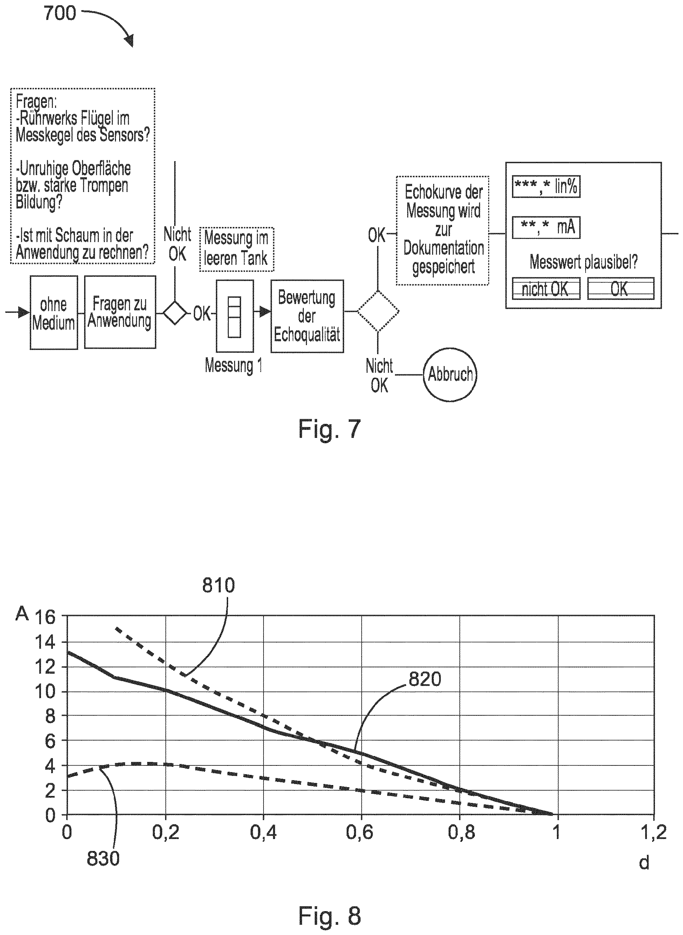

**Fig. 7** zeigt ein Inbetriebnahme-Szenario 700 gemäß einer weiteren Ausführungsform, wobei in dem Behälter ein Rührwerk angeordnet ist. Wenn das Rührwerk im Messkanal des Radarsensors angeordnet ist, kann eine andere Art der Inbetriebnahme gewählt werden. Ist das Rührwerk nicht im Messkanal des Sensors, kann das Verfahren wie oben und/oder nachfolgend beschrieben verwendet werden. Dabei kann der Behälter leer sein; beispielsweise kann keine Möglichkeit gegeben sein, ein Medium einzufüllen. Der Sensor ist dabei in oder an dem Behälter installiert und misst den leeren Behälter. Durch den Anlagenbetreiber und/oder durch ein Servicepersonal kann ein Messbereich - z.B. "von .. bis", oder "max" - angegeben sein. Dann kann ein interaktiver Schritt vorgesehen sein, d.h. ein Anlagenbetreiber (etc.) kann gefragt werden, ob die Messung plausibel ist. Wird das bestätigt, dann kann der Sensor als "korrekt eingestellt" betrachtet werden. Das erste große Echo kann damit als eine Reflexion im Bereich des Behälterbodens interpretiert werden. In einem weiteren Schritt kann der Bereich zwischen Antenne und Messbereichsende in zwei Bereiche unterteilt werden: In einen Nahbereich 204 (siehe z.B. **Fig. 2** oder **Fig. 3**) und in einen restlichen Bereich. In dem Nahbereich 204 kann eine sog. "Werksstörsignalausblendung" angewandt werden, welche von der aktuell gemessenen Echokurve 200 eine berechnete Echokurve oder Referenzechokurve 240 subtrahiert. Ist bei der aktuell gemessenen Echokurve 200 keine erhöhte Amplitude gegenüber der Werksstörsignalausbelendung zu erkennen, kann die Messung als akzeptabel für die Inbetriebnahme bewertet werden. Da die Amplituden in dem Nahbereich 204 typischerweise eine hohe Intensität aufweisen, können diese nach einer Subtraktion von der Referenzechokurve 240 gut erkannt werden.

Für den restlichen Bereich kann folgendes Schema angewandt werden:
- Ist in diesem Bereich kein Echo zu erkennen ist die Messung als akzeptabel für die Inbetriebnahme zu bewerten.
- Ist in diesem Bereich ein Echo zu erkennen, muss die Amplitude dieses Echos bewertet werden. Dazu kann die Sensoreinstellung herangezogen werden. Wird eine wässrige Lösung erwartet, können höhere Amplituden toleriert werden, als wenn eine ölige Flüssigkeit mit kleinerer Nutzechoamplitude erwartet wird.

Weitere Möglichkeiten für eine Auswertung der Echokurve können umfassen: Falls ein Medium oder Produkt im Behälter vorhanden ist, kann es möglich sein, Vielfachechos zu bewerten. Sollten Vielfachechos vorhanden sein, kann der Sensor oder das Bedientool die Amplitude der Vielfachechos mit der Amplitude des Füllstandechos vergleichen. Sollten die Vielfachechos ausreichend kleiner sein als das Füllstandecho, so ist die Messung in diesem Aspekt als akzeptabel für die Inbetriebnahme zu bewerten. Auch Vielfachechos außerhalb des eigentlichen Messbereiches können zur Beurteilung herangezogen werden.

Zur Beurteilung einer akzeptablen Messung kann z.B. auf Einstellungen bzw. Parameter zurückgegriffen werden, die ein Fachmann, z.B. vom Servicepersonal, eingegeben hat. Dies können neben Informationen über das Medium auch Informationen über die Anwendung oder den Behälter sein.

Informationen über das Medium können z.B. umfassen:
- Mediumtyp Schüttgut: Hier können die Echoamplituden stark schwanken. Die Messung kann daher schwieriger sein.
- Mediumtyp Flüssigkeit: Dabei kann der DK-Wert betrachtet werden. Ist dieser z.B. kleiner als 2, dann kann die Reflektionseigenschaft zu gering sein, und es kann sinnvoll sein, ein nicht automatisiertes Verfahren zur Inbetriebnahme zu wählen.
- DK-Wert: Für kleine DK-Werte kann das gezeigt Verfahren nur eingeschränkt anwendbar sein.

Informationen über die Anwendung können z.B. umfassen:
- Lagertank: Die Messung kann hier sicherer sein, da nur langsame Füllstandsänderungen zu erwarten sind.
- Dosierbehälter: Hier sind schnelle Füllstandsänderungen zu erwarten, weshalb es vorteilhaft sein kann, größere Sicherheiten - z.B. ein größerer Sicherheitsabstand - zu verwenden.

Informationen über den Behälter können z.B. umfassen:
- Rührwerk vorhanden: Die unruhige Oberfläche kann stark schwankende Echoamplituden erzeugen, weshalb eine sichere Messung kaum möglich ist.
- Klöpperförmige Behälterdecke: Diese Behältergeometrie kann stärkere Vielfachechos erzeugen.

**Fig. 8** zeigt einige Beispiele für Echoamplituden gemäß einer weiteren Ausführungsform. Dabei sind die Echoamplituden als Ausschnitt einer Echokurve 200 dargestellt, dessen x-Achse eine Entfernung d in Meter und dessen y-Achse eine Amplitude A in dB darstellt. Dabei zeigt eine Kurve 810 eine erwartete Erhöhung der Amplitude bei einem Antennensystem mit Flansch. Eine Kurve 820 zeigt eine erwartete Erhöhung der Amplitude bei einem Antennensystem mit Gewinde. Eine Kurve 830 zeigt eine erwartete Erhöhung der Amplitude bei einem Antennensystem mit Hornantenne. Diese Kurven können, je nach verwendeter Antenne, z.B. als Referenzechokurve verwendet werden.

### Liste der Bezugszeichen

- 100: Füllstandmessgerät
- 120: Radarsensoreinheit
- 122: Antenne
- 125: reflektierte Radarwellen
- 140: Auswerteeinheit
- 145: Leitung
- 150: Behälter
- 152: Behälterboden
- 155: Anhaftungen
- 160: Füllgut
- 170: Füllstand, Füllgutoberfläche
- 200: Echokurve
- 202: höchste Amplitude
- 204: Nahbereich
- 210: erstes Echo
- 211: erste Entfernung
- 212: erste Amplitude
- 214: berechnete erste Amplitude
- 217: Sicherheitsabstand
- 240: berechnete Echokurve, Referenzechokurve
- 241: Amplitudenwert
- 242: zweite Referenzamplitude
- 300: Echokurve
- 320: zweites Echo
- 321: zweite Entfernung
- 322: zweite Amplitude
- 342: zweite Referenzamplitude
- 400: Flussdiagramm
- 402 - 412: Schritte
- 500 - 700: Inbetriebnahme-Szenarien
- 810 - 830: Kurven

## Patentansprüche

1. Verfahren zur Inbetriebnahme eines Füllstandmessgeräts (100), das zur Messung eines Füllstands (170) eines Füllgutes (160) in einem Behälter (150) eingerichtet ist, mit den Schritten:
erfassen, mittels einer Radarsensoreinheit (120) des Füllstandmessgeräts (100), einer Echokurve (200), wobei die Echokurve (200) mindestens ein erstes Echo (210) aufweist;
auswählen, aus der Echokurve (200), des ersten Echos (210), das eine erste Entfernung (211) und eine erste Amplitude (212) aufweist;
bestimmen einer berechneten ersten Amplitude (214), wobei die berechnete erste Amplitude (214) eine Funktion der ersten Entfernung (211) ist;
wenn die erste Amplitude (212) höher ist als die berechnete erste Amplitude (214), bewerten der Echokurve (200) als akzeptabel für die Inbetriebnahme,
**dadurch gekennzeichnet, dass**
die erste Amplitude (212) die höchste Amplitude der Echokurve (200) aufweist;
bestimmen mindestens eines zweiten Echos (320), wobei das zweite Echo (320) eine zweite Entfernung (321) und eine zweite Amplitude (322) aufweist, wobei die zweite Entfernung (321) kleiner ist als die erste Entfernung (211); und
wenn die zweite Amplitude (322) größer ist als eine zweite Referenzamplitude (242) einer Referenzechokurve (240) an der zweiten Entfernung (321), bewerten der gemessenen Echokurve (200) als nichtakzeptabel für die Inbetriebnahme.

2. Verfahren nach Anspruch 1,
wobei der Behälter (150) entweder leer oder zumindest teilweise mit einer Flüssigkeit gefüllt ist.

3. Verfahren nach Anspruch 1 oder 2,
wobei die berechnete erste Amplitude (214) eine Funktion der ersten Entfernung (211) ist.

4. Verfahren nach einem der vorhergehenden Ansprüche,
wobei, für das Bewerten der gemessenen Echokurve (200) als akzeptabel, die erste Amplitude (212) um einen Sicherheitsabstand (217) höher ist als die berechnete erste Amplitude (214),
wobei der Sicherheitsabstand (217) 1 dB, 2 dB, 5 dB, 10 dB, 15 dB, oder mehr beträgt.

5. Verfahren nach Anspruch 1,
wobei die Referenzechokurve (240) im Wesentlichen einer Echokurve (200) entspricht, die in einem unendlich langen leeren Behälter (150) gemessen wurde.

6. Verfahren nach einem der vorhergehenden Ansprüche,
wobei ein Echo von einem Nahbereich (204) des Füllstandmessgeräts (100) vernachlässigt wird.

7. Füllstandmessgerät (100) zur Messung eines Füllstands (170) eines Füllgutes (160) in einem Behälter (150), das Füllstandmessgerät (100) aufweisend,
eine Radarsensoreinheit (120), die zum Senden von Radarwellen und zum Empfangen von reflektierten Radarwellen (125) eingerichtet ist; und
eine Auswerteeinheit (140), die zum Umwandeln der reflektierten Radarwellen (125) in eine Echokurve (200) und zur Auswertung der Echokurve (200) gemäß einem Verfahren nach einem der vorhergehenden Ansprüche eingerichtet ist.

8. Verwendung eines Füllstandmessgeräts (100) nach Anspruch 7 zur Messung eines Füllstands (170), einer Topologie und/oder eines Grenzstandes eines Füllgutes (160) in einem Behälter (150).

9. Programmelement, welches, wenn es auf einer Auswerteeinheit (140) eines Füllstandmessgeräts (100) nach Anspruch 7 und/oder auf einer anderen Recheneinheit ausgeführt wird, die Auswerteeinheit (140) und/oder die Recheneinheit anweist, das Verfahren nach einem der Ansprüche 1 bis 6 durchzuführen.

10. Computerlesbares Medium, auf dem ein Programmelement nach dem vorhergehenden Anspruch gespeichert ist.

## Claims

1. A method for commissioning a fill level measuring device (100) configured for measuring a filling level (170) of a filling material (160) in a container (150), comprising following steps:
capturing, by means of a radar sensor unit (120) of the fill level measuring device (100), an echo curve (200), the echo curve (200) having at least one first echo (210);
selecting, from the echo curve (200), the first echo (210), which has a first distance (211) and a first amplitude (212);
determining a calculated first amplitude (214), wherein the calculated first amplitude (214) is a function of the first distance (211);
if the first amplitude (212) is higher than the calculated first amplitude (214), evaluating the echo curve (200) as acceptable for commissioning,
**characterized in that**
the first amplitude (212) has the highest amplitude of the echo curve (200); determining at least a second echo (320), wherein the second echo (320) has a second distance (321) and a second amplitude (322), the second distance (321) being smaller than the first distance (211); and
if the second amplitude (322) is greater than a second reference amplitude (242) of a reference echo curve (240) at the second distance (321), evaluating the measured echo curve (200) as not-acceptable for commissioning.

2. The method according to claim 1,
wherein the container (150) is either empty or is at least partially filled with a liquid.

3. The method according to claim 1 or 2,
wherein the calculated first amplitude (214) is a function of the first distance (211).

4. The method according to any one of the preceding claims,
wherein, for evaluating the measured echo curve (200) as acceptable, the first amplitude (212) is by a safety margin (217) higher than the calculated first amplitude (214),
wherein the safety distance (217) is 1 dB, 2 dB, 5 dB, 10 dB, 15 dB, or more.

5. The method according to claim 1,
wherein the reference echo curve (240) essentially corresponds to an echo curve (200) measured in an infinitely long empty container (150).

6. The method according to any one of the preceding claims,
wherein an echo from a vicinity (204) of the fill level measuring device (100) is neglected.

7. A fill level measuring device (100) for measuring a filling level (170) of a filling material (160) in a container (150), the fill level measuring device (100) comprising:
a radar sensor unit (120) configured for transmitting radar waves and for receiving reflected radar waves (125); and
an evaluation unit (140), which is configured for converting the reflected radar waves (125) into an echo curve (200) and for evaluating the echo curve (200) according to a method according to one of the preceding claims.

8. Use of a fill level measuring device (100) according to claim 7 for measuring a filling level (170), a topology and/or a limit level of a filling material (160) in a container (150).

9. A program element which, when executed on an evaluation unit (140) of a fill level measuring device (100) according to claim 7 and/or on another computing unit, instructs the evaluation unit (140) and/or the computing unit to perform the method according to any one of claims 1 to 6.

10. A computer-readable medium on which a program element according to the preceding claim is stored.

## Revendications

1. Procédé de mise en service d'un appareil de mesure de niveau de remplissage (100) qui est conçu pour mesurer un niveau de remplissage (170) d'un produit de remplissage (160) dans un récipient (150), comportant les étapes de :
détecter, au moyen d'une unité de capteur radar (120) de l'appareil de mesure de niveau de remplissage (100), une courbe d'écho (200), la courbe d'écho (200) présentant au moins un premier écho (210) ;
sélectionner, à partir de la courbe d'écho (200), le premier écho (210) qui présente une première distance (211) et une première amplitude (212) ;
déterminer une première amplitude calculée (214), la première amplitude calculée (214) étant une fonction de la première distance (211) ;
lorsque la première amplitude (212) est supérieure à la première amplitude calculée (214), évaluer la courbe d'écho (200) comme étant acceptable pour la mise en service, **caractérisé en ce**
**que** la première amplitude (212) présente l'amplitude la plus élevée de la courbe d'écho (200) ;
et **qu'**au moins un deuxième écho (320) est déterminé, le deuxième écho (320) présentant une deuxième distance (321) et une deuxième amplitude (322), la deuxième distance (321) étant inférieure à la première distance (211) ; et
lorsque la deuxième amplitude (322) est supérieure à une deuxième amplitude de référence (242) d'une courbe d'écho de référence (240) à la deuxième distance (321), la courbe d'écho mesurée (200) est évaluée comme étant inacceptable pour la mise en service.

2. Procédé selon la revendication 1,
dans lequel le récipient (150) est soit vide, soit au moins partiellement rempli d'un liquide.

3. Procédé selon la revendication 1 ou 2,
dans lequel la première amplitude calculée (214) est une fonction de la première distance (211).

4. Procédé selon l'une des revendications précédentes,
dans lequel, pour évaluer la courbe d'écho mesurée (200) comme étant acceptable, la première amplitude (212) est supérieure à la première amplitude calculée (214) d'une marge de sécurité (217),
la marge de sécurité (217) étant de 1 dB, 2 dB, 5 dB, 10 dB, 15 dB ou plus.

5. Procédé selon la revendication 1,
dans lequel la courbe d'écho de référence (240) correspond sensiblement à une courbe d'écho (200) qui a été mesurée dans un récipient vide de longueur infinie (150).

6. Procédé selon l'une des revendications précédentes,
dans lequel un écho provenant d'une zone proche (204) de l'appareil de mesure de niveau de remplissage (100) est négligé.

7. Appareil de mesure de niveau de remplissage (100) pour mesurer un niveau de remplissage (170) d'un produit de remplissage (160) dans un récipient (150), l'appareil de mesure de niveau de remplissage (100) présentant :
une unité de capteur radar (120) qui est conçue pour émettre des ondes radar et pour recevoir des ondes radar réfléchies (125) ; et
une unité d'évaluation (140) qui est conçue pour convertir les ondes radar réfléchies (125) en une courbe d'écho (200) et pour évaluer la courbe d'écho (200) conformément à un procédé selon l'une des revendications précédentes.

8. Utilisation d'un appareil de mesure de niveau de remplissage (100) selon la revendication 7 pour mesurer un niveau de remplissage (170), une topologie et/ou un niveau limite d'un produit de remplissage (160) dans un récipient (150) .

9. Élément de programme qui, lorsqu'il est exécuté sur une unité d'évaluation (140) d'un appareil de mesure de niveau de remplissage (100) selon la revendication 7 et/ou sur une autre unité de calcul, ordonne à l'unité d'évaluation (140) et/ou à l'unité de calcul de mettre en œuvre le procédé selon l'une des revendications 1 à 6.

10. Support lisible par ordinateur sur lequel est enregistré un élément de programme selon la revendication précédente.
